# EUROPÄISCHE PATENTSCHRIFT

(11) **EP 3 792 699 B1**
(45) Veröffentlichungstag und Bekanntmachung des Hinweises auf die Patenterteilung: **21.06.2023**
(21) Anmeldenummer: 20195396.5
(22) Anmeldetag: 10.09.2020
(51) Int. Cl.: G03H 1/02, G03H 1/04, G03H 1/22, B32B 37/00, B32B 38/18, B65H 9/08, B65H 23/00, G01M 11/02, G01N 21/956, G07D 7/00, B65H 5/22, G07D 7/12, G03H 1/00, G03H 1/26

(54) **VORRICHTUNG UND VERFAHREN ZUR ERFASSUNG EINES HOLOGRAFISCHEN MERKMALS**
METHOD AND DEVICE FOR CAPTURING A HOLOGRAPHIC FEATURE
DISPOSITIF ET PROCÉDÉ DE DÉTECTION D'UNE CARACTÉRISTIQUE HOLOGRAPHIQUE

(30) Priorität: 13.09.2019 DE 102019124702
(43) Veröffentlichungstag der Anmeldung: 17.03.2021
(73) Patentinhaber: Bundesdruckerei GmbH, 10969 Berlin (DE)
(72) Erfinder: Thater, Marcel, 30952 Ronnenberg (DE); Petri, Michael, 32457 Porta Westfalica (DE)
(74) Vertreter: Hentrich Patent- & Rechtsanwaltspartnerschaft mbB

(56) Entgegenhaltungen:
- JP-B2- 4 395 587
- US-B1- 6 176 482
- US-B2- 7 839 547

## Beschreibung

Die vorliegende Erfindung betrifft eine Vorrichtung zur Erfassung eines holografischen Merkmals an einem Filmabschnitt eines bahnförmigen Belichtungsfilms. Die Erfindung betrifft außerdem ein Verfahren zur Erfassung eines holografischen Merkmals.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden bei diesem Verfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion der, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge(oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt.

Bei Sicherheits- oder Wertdokumenten eignet sich der Einsatz von aus Volumenhologrammen gebildeten holografischen Merkmalen, da sie besonders geeignet sind, sich bei beispielsweise lotrechter Betrachtung des belichteten und entwickelten holografischen Films verifizieren zu lassen. Eine Einstrahlung des Rekonstruktionslichts erfolgt hierbei vorzugsweise unter einem spitzen Winkel, beispielsweise unter 45 Grad zum Lot. Der Winkel zwischen der Einstrahlrichtung des Rekonstruktionslichts und der Ausfallrichtung des an dem erzeugten Volumenhologramm gebeugten Lichts, welches die Information des Hologramms rekonstruiert, wird im Wesentlichen bei der Herstellung des Masters festgelegt.

Die DE 10 2007 052 952 A1 beschreibt ein Verfahren und eine Vorrichtung zur Herstellung von Hologrammen mit wasserzeichenartiger Struktur in Form eines Volumenreflexionshologramms, das einen ersten stärker streuenden Bereich und einen zweiten schwächer streuenden Bereich aufweist. Diese Druckschrift beschreibt ferner eine Vorrichtung, um das Hologramm des Sicherheitsdokuments zu verifizieren.

Die DE 10 2013 200 980 A1 beschreibt eine Vorrichtung zum nachträglichen holographischen Kennzeichnen eines Verbundkörpers sowie ein entsprechendes Verfahren.

Die DE 10 2010 014 305 A1 beschreibt ebenfalls ein Verfahren und eine Vorrichtung zum Herstellen von Kontaktkopien von Reflexionsvolumenhologrammen und nicht eine Vorrichtung zum Verifizieren derselben.

Die US 6,176,482 B1 beschreibt eine Saugbox mit einer Vielzahl unterschiedlicher Saugkammern um ein bogenförmige Substrate unterschiedlicher Abmessung, z.B. mit Hologrammen, mittels eines Unterdrucks zu fixieren bzw. zu führen. Ebenso wird ein optische Erfassung zur quantitativen Inspektion der transportierten Substrate beschrieben.

Die JP 4395587 B2 beschreibt ebenfalls eine Trommel für den Transport von bogenförmigen Substraten, z.B. mit Hologrammen, wobei diese auf den Mantel der Trommel gespannt und von einer Inspektionskamera während der Trommeldrehung optisch erfasst werden.

Die US 7,839,547 B2 beschreibt eine Vorrichtung zur optischen Erfassung eines Hologramms, wobei eine Beleuchtungseinrichtung und eine optische Erfassungseinrichtung vorhanden sind. Der Hologrammfilm liegt dabei bahnförmig vor.

Die Verifizierung von holografischen Merkmalen an einem Filmabschnitt eines Belichtungsfilms, insbesondere bevor dieser Filmabschnitt auf das Wert- oder Sicherheitsdokument aufgebracht wird, hat sich als sehr unzuverlässig aus den folgenden Gründen erwiesen:
Die holografischen Merkmale auf dem Belichtungsfilm können nicht erfasst werden, wenn der Filmabschnitt nicht vollständig plan, blasen- sowie knitterfrei gehalten ist. Durch Blasen oder Knitterstellen treten bei einer Beleuchtung des Films Reflexionen auf, die zu unerwünschten oder ungenügenden Verifikationsergebnissen führen. Aus diesem Grunde kann eine lediglich stichprobenartige Qualitätsprüfung stattfinden, die zumeist "manuell", also durch Augenscheineinnahme erfolgt.

Es ist daher die Aufgabe der vorliegenden Erfindung, eine Vorrichtung und ein Verfahren zur Erfassung eines holografischen Merkmals an einem Filmabschnitt eines bahnförmigen Belichtungsfilms anzugeben, die eine zuverlässige Verifikation bei zugleich erhöhtem Automatisierungsgrad bereitstellen.

Diese Aufgabe wird mit einer Vorrichtung mit dem Merkmalsbestand des Anspruchs 1 und durch ein Verfahren mit dem Merkmalsbestand des Anspruchs 10 gelöst. Vorteilhafte Ausgestaltungen mit zweckmäßigen Weiterbildungen der Erfindung sind in den abhängigen Ansprüchen angegeben.

Die Vorrichtung zur Erfassung eines holografischen Merkmals an einem Filmabschnitt eines bahnförmigen Belichtungsfilms umfasst insbesondere:
- eine Halteeinrichtung mit einer Saugplatte, auf der der Filmabschnitt platzierbar und an der ein Unterdruck zur Fixierung des Filmabschnitts anlegbar ist,
- eine Hubeinrichtung, die ausgebildet ist, die Halteeinrichtung mit der Saugplatte zwischen einer angehobenen Stellung, wobei die Anhebung der Halteeinrichtung einen Zug auf den Filmabschnitt erzeugt, und einer abgesenkten Stellung zu verstellen,
- eine Beleuchtungseinrichtung zur Beleuchtung des Filmabschnitts aus einer ersten Richtung und unter einem ersten Winkel bezüglich einer Normalen des auf der Saugplatte fixierten Filmabschnitts derart, dass das holografische Merkmal rekonstruiert, und
- eine optische Erfassungseinrichtung deren optischen Achse um einen vom ersten Winkel abweichenden zweiten Winkel bezüglich der Normalen des auf der Saugplatte fixierten Filmabschnitts derart ausgerichtet ist, um das rekonstruierte holografische Merkmal optisch zu erfassen.

Mit dieser Vorrichtung ist der Vorteil verbunden, dass eine verstärkte blasen- und knitterfreie, also eine verbesserte Fixierung des zu prüfenden Filmabschnitts an der Halteeinrichtung realisiert ist. Die verbesserte Fixierung kommt in einem ersten Aspekt dadurch zustande, weil filmabwärts und/oder filmaufwärts ein Überstand des Belichtungsfilms vorliegt, welcher bei der Anhebung der Halteeinrichtung zu einer Zugkraft an dem auf der Halteeinrichtung befindlichen Filmabschnitt führt, die also entweder aus der Gewichtskraft des Eigengewichts des Überstands oder durch eine anderweitige Zugbelastung aufgrund einer filmabwärts und/oder filmaufwärts vorhandenen Führungsrolle herrührt. Die verbesserte Fixierung kommt aber in einem zweiten Aspekt durch den Unterdruck, d.h. durch eine Saugkraft, zustande, die an dem zu prüfenden Filmabschnitt angelegt ist.

Die Saugplatte hat dabei vorzugsweise eine Mehrzahl an Saugöffnungen, sodass mehrere Saugpunkte an dem Filmabschnitt wirksam sind, die insbesondere gleichverteilt über der Saugplatte und damit dem Filmabschnitt vorliegen. Der zweite Winkel bezüglich der Normalen, welcher die Lage der optischen Achse der optischen Erfassungseinrichtung charakterisiert, kann vorzugsweise Null Grad betragen, sodass die optische Achse mit der Normalen des Filmabschnitts zusammenfällt oder parallel zu dieser orientiert ist. Der erste Winkel, welcher die Ausrichtung des auf den Filmabschnitt einfallenden Lichts charakterisiert, liegt vorzugsweise zwischen 0 Grad und 90 Grad, besonders bevorzugt bei 45 Grad. Der erste Winkel ist derart gewählt, dass das Volumenhologramm, d.h. das holografische Merkmal rekonstruiert.

Es hat sich als vorteilhaft erwiesen, wenn eine Aufstreifeinrichtung vorhanden ist, die ausgebildet ist, den Filmabschnitt auf die Saugplatte aufzustreifen, da hierdurch zusätzlich Blasen zwischen dem Filmabschnitt und der Saugplatte herausgedrückt werden können. Vorzugsweise ist die Aufstreifeinrichtung aktiv, wenn sich die Halteeinrichtung in der angehobenen Stellung befindet, sodass beispielsweise durch den Druck der mittels der Hubeinrichtung angehobenen Halteeinrichtung ein entsprechender Anpressdruck auf die oder von der Aufstreifeinrichtung ausgeübt wird.

Zusätzlich hat es sich als vorteilhaft erwiesen, wenn die Aufstreifeinrichtung einen zwischen zwei Anschlägen verschiebbaren Schlitten umfasst, an welchem eine auf einer Achse drehbar gelagerte und mit dem Filmabschnitt wechselwirkende Anpressrolle gelagert ist. Hier kann die Anpressrolle insbesondere dann mit dem Filmabschnitt wechselwirken, wenn sich die Halteeinrichtung in der angehobenen Stellung befindet, wobei beispielsweise durch den Druck der mittels der Hubeinrichtung angehobenen Halteeinrichtung ebenfalls der Anpressdruck durch die Anpressrolle einstellbar ist. Zur Verschiebung des Schlittens ist beispielsweise ein Linearmotor vorhanden, wobei auch eine pneumatische oder eine hydraulische Verstellung möglich ist. Es hat sich als vorteilhaft erwiesen, wenn der Schlitten und die Hubeinrichtung über ein identisches Antriebskonzept verfügen, so, dass beispielsweise sowohl die Hubeinrichtung als auch der Schlitten elektromotorisch verstellbar sind, oder so, dass sowohl die Hubeinrichtung als auch der Schlitten pneumatisch verstellbar sind, oder so, dass sowohl die Hubeinrichtung als auch der Schlitten hydraulisch verstellbar sind. Eine solche Ausgestaltung reduziert die Anzahl etwaiger Medienführungen zur Betätigung der einzelnen Aktuatoren der Vorrichtung.

Ferner ist die Möglichkeit eröffnet, dass die Beleuchtungseinrichtung an einem Beleuchtungsarm angeordnet ist, und dass der Beleuchtungsarm eine Winkeleinstelleinrichtung aufweist, die ausgebildet ist, die Beleuchtungseinrichtung zur Einstellung des ersten Winkels zu verschwenken und/oder in ihrer Lage festzulegen. Durch diese Konfiguration ist es möglich, die holografischen Merkmale bei einer Vielzahl unterschiedlicher Filmabschnitte sichtbar zu machen, da die Einstrahlungsrichtung eines Rekonstruktionslichts in Abhängigkeit des vorhandenen holografischen Merkmals eingestellt werden kann.

Es hat sich als vorteilhaft erwiesen, wenn zur Rekonstruktion und zur optischen Erfassung mindestens eines weiteren holografischen Merkmals eine zweite Beleuchtungseinrichtung zur Beleuchtung des Filmabschnitts aus einer zweiten Richtung unter einem dritten Winkel bezüglich der Normalen des auf der Saugplatte fixierten Filmabschnitts vorhanden ist. Vorzugsweise ist hierbei die Einstrahlung eines weiteren Rekonstruktionslichts senkrecht orientiert zu der Einstrahlung des Rekonstruktionslichts der ersten Beleuchtungseinrichtung. Durch den Einsatz der zweiten Beleuchtungseinrichtung lassen sich auch unterschiedlich rekonstruierende, beispielsweise senkrecht zueinander orientierte, Volumenhologramme rekonstruieren und mittels der optischen Erfassungseinrichtung detektieren.

Um weitere Volumenhologramme, die bei unterschiedlichen Einfallswinkeln rekonstruieren, untersuchen zu können, hat es sich als sinnvoll erwiesen, wenn alternativ oder ergänzend die zweite Beleuchtungseinrichtung ebenfalls an einem zweiten Beleuchtungsarm angeordnet ist, und wenn der zweite Beleuchtungsarm eine Winkeleinstelleinrichtung aufweist, die ausgebildet ist, die zweite Beleuchtungseinrichtung zur Einstellung des dritten Winkels zu verschwenken und/oder in ihrer Lage festzulegen.

Aus dem Stand der Technik ist es bekannt, dass Volumenhologramme auch in unterschiedlichen Farben, mithin also mit kohärentem Licht unterschiedlicher Wellenlänge erzeugt wurden und daher auch nur bei diesen Wellenlängen wieder rekonstruieren. Aus diesem Grunde ist es sinnvoll, wenn die Beleuchtungseinrichtung und/oder die zweite Beleuchtungseinrichtung ausgebildet ist, umgeschaltet zu werden zwischen einer ersten Leuchtkonfiguration, in welcher sie Licht einer ersten Wellenlänge oder eines ersten Wellenlängenspektrums emittiert, und einer zweiten Leuchtkonfiguration, in welcher sie Licht einer zweiten Wellenlänge oder eines zweiten Wellenlängenspektrums emittiert. Mit anderen Worten kann also die Farbe des eingestrahlten Lichts verändert werden, wozu die erste Beleuchtungseinrichtung und/oder die zweite Beleuchtungseinrichtung vorzugsweise ein geeignetes Array an Leuchtdioden umfasst, die hinsichtlich ihrer Farbgebung oder der Farbe des von ihnen emittierten Lichts einstellbar sind.

Um einen bahnförmigen Belichtungsfilm auch nutzenweise, also Filmabschnitt für Filmabschnitt, untersuchen zu können, hat es sich als sinnvoll erwiesen, wenn ein Druckmarkensensor vorhanden ist, der ausgebildet ist, die zu prüfenden Filmabschnitte, insbesondere während ihres Transports auf der oder über die Halteeinrichtung zu detektieren, sodass die Vorrichtung erst dann mit ihren Untersuchungsschritten beginnt, wenn der Filmabschnitt passend auf der Halteeinrichtung positioniert ist.

Die optische Erfassungseinrichtung kann beispielsweise als ein redundantes System vorliegen, welches eine erste Kamera und eine zweite Kamera umfasst. Dabei sind beide Kameras ausgestaltet, alle am Filmabschnitt rekonstruierenden holografischen Merkmale zu erfassen. Alternativ oder ergänzend kann jedoch auch vorgesehen sein, dass die erste Kamera zur Erfassung von reflektiertem Licht einer ersten Wellenlänge oder eines ersten Wellenlängenspektrums ausgebildet ist, wobei die zweite Kamera zur Erfassung von reflektiertem Licht einer von der ersten Wellenlänge abweichenden zweiten Wellenlänge oder zur Erfassung eines vom ersten Wellenlängenspektrum abweichenden zweiten Wellenlängenspektrum ausgebildet ist. Beispielsweise ist die Eine aus erster Kamera und zweiter Kamera zur optischen Erfassung von im sichtbaren Lichtspektrum rekonstruierenden holografischen Merkmalen ausgebildet, wobei die Andere aus erster Kamera und zweiter Kamera zur optischen Erfassung von bei im nicht-sichtbaren Lichtspektrum (bspw. UV und/oder IR) rekonstruierenden holografischen Merkmalen ausgebildet ist.

Die für die Vorrichtung genannten Vorteile und vorteilhaften Ausgestaltungen gelten gleichermaßen für das erfindungsgemäße Verfahren. Dieses umfasst insbesondere die folgenden Schritte:
- Transportieren des bahnförmigen Belichtungsfilms über eine Halteeinrichtung mit einer Saugplatte, die sich in einer abgesenkten Stellung befindet,
- Erkennen des zu prüfenden Filmabschnitts an oder bei der Halteeinrichtung,
- Fixieren des Filmabschnitts an der Saugplatte mittels eines Unterdrucks,
- Verstellen der Halteeinrichtung mit der Saugplatte aus der abgesenkten Stellung in eine angehobene Stellung mittels einer Hubeinrichtung, wobei die Anhebung der Halteeinrichtung einen Zug auf den Filmabschnitt erzeugt,
- Beleuchten des Filmabschnitts aus einer ersten Richtung unter einem ersten Winkel bezüglich einer Normalen des auf der Saugplatte fixierten Filmabschnitts mittels einer Beleuchtungseinrichtung derart, dass das holografische Merkmal rekonstruiert, und
- optisches Erfassen des rekonstruierten holografischen Merkmals mittels einer optischen Erfassungseinrichtung, deren optische Achse um einen vom ersten Winkel abweichenden zweiten Winkel bezüglich der Normalen des auf der Saugplatte fixierten Filmabschnitts ausgerichtet ist.

Auch hier ist also eine zuverlässige Fixierung des Filmabschnitts vor seiner optischen Untersuchung gegeben, die einerseits durch die Hubbewegung mit den damit einhergehenden Zugkräfte am Filmabschnitt durch die Bereiche oder durch den jeweiligen Überstand des Belichtungsfilms zustande kommt, der sich nicht auf der Halteeinrichtung befindet, und die andererseits durch die Saugkraft der Saugplatte realisiert ist. Hierdurch ist eine blasen-, verzerrungs- und knitterfreie Fixierung des zu untersuchenden Filmabschnitts des bahnförmigen Belichtungsfilms geschaffen.

Etwaig dennoch vorhandene Blasen lassen sich entfernen, wenn der auf der Halteeinrichtung positionierte Filmabschnitt mittels einer Aufstreifeinrichtung auf die Saugplatte aufgestreift wird, insbesondere dann, wenn die Halteeinrichtung in die angehobene Stellung verstellt wurde.

Dabei kann der auf der Halteeinrichtung positionierte Filmabschnitt mittels einer Anpressrolle der Aufstreifeinrichtung aufgestreift werden, wobei die Anpressrolle insbesondere an einem zwischen zwei Anschläge verschiebbar geführten Schlitten gelagert ist, und wobei die Anpressroller ihren Anpressdruck vorzugsweise aufgrund der wirkenden Hubkraft der Hubeinrichtung auf den Filmabschnitt ausübt. Durch die Anpressrolle werden betriebssicher weitere Blasen oder Knitterstellen vor der optischen Erfassung beseitigt.

Für das Verfahren ist alternativ oder ergänzend die Möglichkeit eröffnet, dass der Filmabschnitt aus einer zweiten Richtung unter einem dritten Winkel bezüglich der Normalen des auf der Saugplatte fixierten Filmabschnitts mittels einer zweiten Beleuchtungseinrichtung derart beleuchtet wird, dass mindestens ein weiteres holografisches Merkmal rekonstruiert und optisch erfasst wird. Somit können also unterschiedliche holografische Merkmale an ein- und demselben Filmabschnitt untersucht werden, die jeweils einen merkmalbezogenen, eigenen Einfallswinkel für ihre Rekonstruktion benötigen.

Um den Filmabschnitt zusätzlich an der Halteeinrichtung gespannt fixieren zu können, hat es sich als sinnvoll erwiesen, wenn der bahnförmigen Belichtungsfilm filmaufwärts und/oder filmabwärts des Filmabschnitts in seiner Lage zumindest teilweise fixiert wird, bevor die Halteeinrichtung in die angehobene Stellung gebracht wird. Damit wird also am Filmabschnitt an der Halteeinrichtung eine verstärkte Zugkraft angelegt durch die sich nicht an der Halteeinrichtung befindlichen Teile des Belichtungsfilms. Eine zuverlässige, planflächige Anlage des Filmabschnitts an der Saugplatte der Halteeinrichtung ist somit gewährleistet.

Es hat sich ferner als sinnvoll erwiesen, wenn die optische Erfassungseinrichtung ein bei einer ersten Wellenlänge oder bei einem ersten Wellenlängenbereich rekonstruierendes erstes holografisches Merkmal erfasst, bevor die optische Erfassungseinrichtung ein bei einer von der ersten Wellenlänge abweichenden zweiten Wellenlänge oder bei einem vom ersten Wellenlängenbereich abweichenden zweiten Wellenlängenbereich rekonstruierendes zweites holografisches Merkmal erfasst. Dies ist beispielsweise möglich, indem die Beleuchtungseinrichtung ausgebildet ist, Rekonstruktionslicht unterschiedlicher Wellenlängen und unterschiedlicher Einfallsrichtungen auf den Filmabschnitt, insbesondere das holografische Merkmal zu richten, sodass unterschiedliche holografische Merkmale an ein- und demselben Filmabschnitt mittels der optischen Erfassungseinrichtung erfasst werden können.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine perspektivische Darstellung einer Vorrichtung zur Erfassung eines holografischen Merkmals eines bahnförmigen Belichtungsfilms,
- Figur 2: eine Seitenansicht der Vorrichtung aus Figur 1 aus einer ersten Richtung, und
- Figur 3: eine Seitenansicht der Vorrichtung aus Figur 1 aus einer zweiten Richtung.

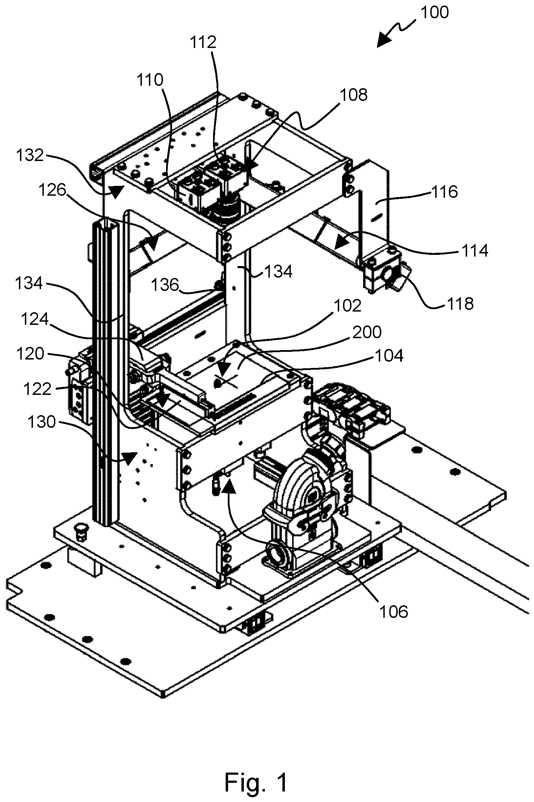

In den Figuren 1 bis 3 ist - aus unterschiedlichen Blickwinkeln - eine Vorrichtung 100 zur Erfassung eines holografischen Merkmals an einem Filmabschnitt 200 eines bahnförmigen Belichtungsfilms gezeigt. Die Vorrichtung 100 weist dabei einen Grundrahmen 130 auf, von dem sich vorliegend zwei Vertikalträger 134 erstrecken, die in einen Deckrahmen 132 übergehen. Zwischen dem Grundrahmens 130 ist eine verstellbare Halteeinrichtung 102 vorhanden, die eine Saugplatte 104 umfasst, auf der der Filmabschnitt 200 platzierbar und an der ein Unterdruck zur Fixierung des Filmabschnitts 200 anlegbar ist. Die Saugplatte 104 verfügt dabei über eine Mehrzahl, insbesondere gleichmäßig verteilter, nicht näher dargestellter Saugöffnungen, um den Filmabschnitt 200 des bahnförmigen Belichtungsfilms mittels eines Unterdrucks fixieren zu können.

Innerhalb bzw. unterhalb des Grundrahmens 130 ist außerdem eine Hubeinrichtung 106 vorhanden, die ausgebildet ist, die Halteeinrichtung 102 zusammen mit der Saugplatte 104 zwischen einer angehobenen Stellung und einer abgesenkten Stellung zu verstellen. Der Einfachheit halber ist in den gezeigten Figuren lediglich die angehobene Stellung gezeigt, da dies für die Erläuterung der vorliegenden Erfindung ausreicht.

Befindet sich die Halteeinrichtung 102 in der abgesenkten Stellung, so kann der Belichtungsfilm mit seinen einzelnen Filmabschnitten 200 ebenfalls noch oberhalb des Grundrahmens 130 über die Halteeinrichtung 102 geführt werden, wobei zur Erfassung der Einzelnutzen oder der einzelnen zu untersuchenden Filmabschnitte 200 ein nicht näher dargestellte Druckmarkensensor zur Detektion von an dem Belichtungsfilm vorhandenen, ebenfalls nicht näher gezeigter Druckmarken vorhanden ist. Der Druckmarkensensor erfasst also die Lage oder die Position der einzelnen Filmabschnitte 200 gegenüber der Halteeinrichtung 102, wobei der fortwährende Transport des bahnförmigen Belichtungsfilms unterbrochen wird, wenn sich der zu untersuchende Filmabschnitt 200 auf der Halteeinrichtung 102 in der richtigen Position und/oder Lage befindet.

Wenn der Filmabschnitt 200 die korrekte Anlage eingenommen hat, so wird ein Unterdruck an den Saugöffnungen der Saugplatte 104 angelegt, wodurch der Filmabschnitt 200 an der Halteeinrichtung 102 fixiert wird. Die Hubeinrichtung 106 verstellt dann die Halteeinrichtung 102 mit der Saugplatte 104 in die angehobene Stellung, wie diese in den Figuren zu erkennen ist.

Beim Anheben der Halteeinrichtung 102 zusammen mit dem Filmabschnitt 200 gelangt diese in Kontakt mit einer Aufstreifeinrichtung 120, die ausgebildet ist, den Filmabschnitt 200 auf die Saugplatte 104 aufzustreifen. Die Aufstreifeinrichtung 120 umfasst dabei einen zwischen zwei Anschlägen 136 verschiebbaren Schlitten 124, an welchem eine auf einer Achse drehbar gelagerte und mit dem Filmabschnitt 200 wechselwirkende Anpressrolle 122 gelagert ist. Sowohl die Hubeinrichtung 106 als auch der Schlitten 124 der Aufstreifeinrichtung 120 sind pneumatisch verstellbar, sodass ein- und dasselbe Betriebsmittel zur Betätigung der einzelnen Aktuatoren Einsatz findet, was die Komplexität der gesamten Vorrichtung 100 reduziert.

Beim Verstellen der Halteeinrichtung 102 in die angehobene Stellung wirkt dabei eine Zugkraft an dem Filmabschnitt 200, die durch den Bereich des bahnförmigen Belichtungsfilms ausgeübt wird, der in Transportrichtung des Belichtungsfilms filmaufwärts und filmabwärts der Halteeinrichtung 102 vorhanden ist. Gegebenenfalls können auch Mittel zur Fixierung der nicht an der Halteeinrichtung 102 befindlichen Teile des Belichtungsfilms vorhanden sein, um die Zugkraft am Filmabschnitt 200 einseitig und/oder beidseitig zu erhöhen. Durch dieses Straffen des Filmabschnitts 200 werden Knitterstellen, Knicke oder Blasen zuverlässig reduziert oder sogar ganz vermieden, wobei die durch die Saugplatte 104 ausgeübte Saugkraft dazu zusätzlich beiträgt. Letzte, etwaig noch vorhandene Blasen lassen sich durch das Aufstreifen des Filmabschnitts 200 mittels der Aufstreifeinrichtung 120 entfernen, so dass nachfolgend eine zuverlässige optische Erfassung holografischer Merkmale durchgeführt werden kann.

Die Vorrichtung 100 weist vorliegend eine Beleuchtungseinrichtung 114 und eine zweite Beleuchtungseinrichtung 126 auf. Die beiden Beleuchtungseinrichtungen 114, 126 sind vorliegend in einem Bereich angeordnet, der sich zwischen dem Grundrahmen 130 und dem Deckrahmen 132 befindet. Beide Beleuchtungseinrichtungen 114, 126 sind ausgebildet, Licht in Richtung des sich an der Halteeinrichtung 102 befindlichen Filmabschnitts 200 zu entsenden. Um holografische Merkmale unterschiedlicher Farben oder unterschiedlicher Wellenlängen rekonstruieren zu können, sind beide Beleuchtungseinrichtungen 114, 126 ausgebildet, die Wellenlänge des von ihnen emittierten Lichts zu verändern. Es ist jedoch auch möglich, dass lediglich eine der beiden Beleuchtungseinrichtungen 114, 126 mit einer veränderbaren Rekonstruktionswellenlänge betreibbar ist.

Am Deckrahmen 132 ist eine optische Erfassungseinrichtung 108 vorhanden und/oder festgelegt, die vorliegend eine erste Kamera 110 und eine zweite Kamera 112 umfasst. Beide Kameras 110, 112 sind auf den sich an der Halteeinrichtung 102 befindlichen Filmabschnitt 200 gerichtet.

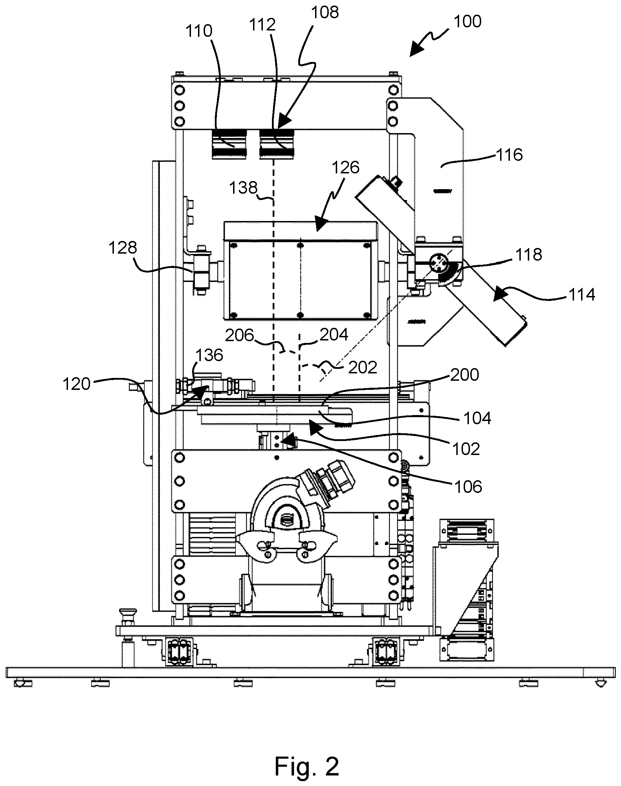

In Figur 2 ist eine erste Seitenansicht der Vorrichtung 100 gezeigt, die erkennen lässt, dass die Beleuchtungseinrichtung 114 an einem Beleuchtungsarm 116 fixiert ist. Die Beleuchtungseinrichtung 114 kann auch auf der dem Beleuchtungsarm 116 gegenüberliegenden Seite durch einen weiteren Beleuchtungsarm 116, der seinerseits an einem der Vertikalträger 134 fixiert ist, festgelegt sein. Wie sich aus der Figur ergibt, ist die Beleuchtungseinrichtung 114 derart ausgerichtet, dass sie den Filmabschnitt 200 an der Halteeinrichtung 102 aus seiner ersten Richtung unter einem ersten Winkel 202 bezüglich einer Normalen 204 des auf der Saugplatte 104 fixierten Filmabschnitts 200 mit Licht derart bestrahlt, dass das holografische Merkmal am Filmabschnitt 200 rekonstruiert. Der erste Winkel 202 ist ein von Null Grad verschiedener Winkel und beträgt vorzugsweise 45 Grad. Es ist zu erkennen, dass der Beleuchtungsarm 116 eine Winkeleinstelleinrichtung 118 umfasst, die ausgebildet ist, die Beleuchtungseinrichtung 114 zur Einstellung des ersten Winkels 202 zu verschwenken und/oder in ihrer Lage festzulegen. Somit können auch holografische Merkmale, die unter einem von 45 Grad verschiedenen Einfallswinkel rekonstruieren, mit dieser Beleuchtungseinrichtung 114 bestrahlt mit der optischen Erfassungseinrichtung 108 erfasst werden.

Die optische Achse 138 der optischen Erfassungseinrichtung 108 ist vorliegend parallel zur Normalen 204 des Filmabschnitts 200 ausgerichtet. Damit schließen die optische Achse 138 und die Normale 204 einen zweiten Winkel 206 von Null Grad zwischen sich ein, so dass mit anderen Worten eine bezüglich der Halteeinrichtung 102 und dem Filmabschnitt 200 lotrechte Betrachtung des am Filmabschnitt 200 rekonstruierenden holografischen Merkmals erfolgt.

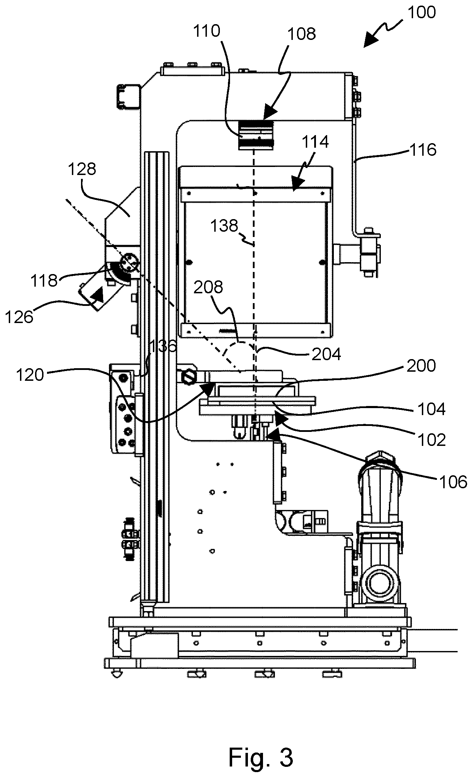

Anhand von Figur 3 ist eine zweite Seitenansicht der Vorrichtung 100 zu erkennen, die die Ausrichtung der zweiten Beleuchtungseinrichtung 126 erkennen lässt. Die zweite Beleuchtungseinrichtung 126 ist ausgebildet, den sich auf der Halteeinrichtung 102 befindenden Filmabschnitt 200 aus einer zweiten Richtung unter einem dritten Winkel 208 bezüglich der Normalen 204 des auf der Saugplatte 104 fixierten Filmabschnitts 200 zu beleuchten. Durch diese zweite Beleuchtungseinrichtung 126 lassen sich also andere holografische Merkmale rekonstruieren und optisch erfassen als dies mit der Beleuchtungseinrichtung 114 der Fall ist. Auch die zweite Beleuchtungseinrichtung 126 ist an einem zweiten Beleuchtungsarm 128 angeordnet, wobei der zweite Beleuchtungsarm 128 ebenfalls eine Winkeleinstelleinrichtung 118 aufweist, die ausgebildet ist, die zweite Beleuchtungseinrichtung 126 zur Einstellung des dritten Winkels 208 zu verschwenken und/oder in ihrer Lage festzulegen.

Nachfolgend wird abschließend das Verfahren zur Erfassung und/oder zur Prüfung holografischer Merkmale an den Filmabschnitt 200 des bahnförmigen Belichtungsfilms erläutert.

Zunächst wird der bahnförmige Belichtungsfilm über die Halteeinrichtung 102 transportiert, die sich in einer abgesenkten Stellung befindet. Dann wird mittels eines nicht näher gezeigten Druckmarkensensors der zu prüfende Filmabschnitt 200 an oder bei der Halteeinrichtung 102 erkannt und mittels des Unterdrucks an der Saugplatte 104 fixiert. Die Halteeinrichtung 102 mit der Saugplatte 104 wird anschließend aus ihrer abgesenkten Stellung in eine angehobene Stellung mittels der Hubeinrichtung 106 verbracht wobei der Filmabschnitt 200 in Kontakt mit der Aufstreifeinrichtung 120 gelangt. Der Schlitten 124 wird beispielsweise zweimal zwischen den beiden Anschlägen 136 hin und her verstellt, wobei die an dem Schlitten 124 auf einer Achse drehbar gelagerte Anpressrolle 133 zweimal über den Filmabschnitt 200 gerollt wird, um Blasen zwischen der Saugplatte 104 und dem Filmabschnitt 200 zu beseitigen. Nachfolgend wird wahlweise entweder mit der Beleuchtungseinrichtung 116 und/oder mit der zweiten Beleuchtungseinrichtung 126 der Filmabschnitt 200 derart beleuchtet, dass zumindest eines von vorzugsweise mehreren holografischen Merkmalen am Filmabschnitt 200 rekonstruiert. Das rekonstruierte holografische Merkmal wird dann mittels der optischen Erfassungseinrichtung 108, beispielsweise mit der ersten Kamera 110 und/oder mit der zweiten Kamera 112, optisch erfasst. Dabei kann mit einer nicht näher gezeigten Steuerung überprüft und gegebenenfalls festgestellt werden, ob das erfasste holografische Merkmal mit ausreichender Qualität, insbesondere fehlerfrei ausgeführt ist; zeitlich bevor es am Ausweis- oder Wertdokument angebracht wird. Letzteres ist insbesondere von Vorteil, denn sollte das holografische Merkmal oder der Filmabschnitt 200 selbst fehlerhaft sein und dennoch auf das Wert- oder Sicherheitsdokument aufgebracht werden, so entsteht ein Ausschuss von deutlich größerem Ausmaß, was es zu vermeiden gilt. Durch die adhäsive Wirkung des Hologrammfilms werden beim erneuten Ablösen weitere Bestandteile des Wert- oder Sicherheitsdokuments beschädigt und daher unbrauchbar. Nach der optischen Erfassung und insbesondere elektronischen Untersuchung der holografischen Merkmale an Filmabschnitt 200 wird die Halteeinrichtung 102 wieder in ihre abgesenkte Stellung mittels der Hubeinrichtung 106 verbracht und der Belichtungsfilm weitertransportiert. Anschließend wird der Belichtungsfilm nutzenweise zugeschnitten, wobei jeweils ein Einzelnutzen, also jeweils ein einzelner Filmabschnitte 200 an jeweils einem Wert- oder Sicherheitsdokument angebracht wird.

Mit dem erfindungsgemäßen Verfahren und der erfindungsgemäßen Vorrichtung 100 ist eine effiziente Fixierung eines zu untersuchenden Filmabschnitts 200 geschaffen, die knitter- und blasenfrei erfolgt und die alle holografischen Merkmale rekonstruierbar machen. Ausschuss an Wert- oder Sicherheitsdokumenten lässt sich damit zuverlässig vermeiden. Zugleich ermöglicht die optische Erfassungseinrichtung 108 eine automatisierte Qualitätskontrolle der holografischen Merkmale an den Filmabschnitten 200.

### BEZUGSZEICHENLISTE

- 100: Vorrichtung
- 102: Halteeinrichtung
- 104: Saugplatte
- 106: Hubeinrichtung
- 108: optische Erfassungseinrichtung
- 110: erste Kamera
- 112: zweite Kamera
- 114: Beleuchtungseinrichtung
- 116: Beleuchtungsarm
- 118: Winkeleinstelleinrichtung
- 120: Aufstreifeinrichtung
- 122: Anpressrolle
- 124: Schlitten
- 126: zweite Beleuchtungseinrichtung
- 128: zweiter Beleuchtungsarm
- 130: Grundrahmen
- 132: Deckrahmen
- 134: Vertikalträger
- 136: Anschlag
- 138: optische Achse
- 200: Filmabschnitt
- 202: erster Winkel
- 204: Normale
- 206: zweiter Winkel
- 208: dritter Winkel

## Patentansprüche

1. Vorrichtung (100) zur Erfassung eines holografischen Merkmals an einem Filmabschnitt (200) eines bahnförmigen Belichtungsfilms, in den das holografische Merkmal einbelichtet wurde, umfassend:
- eine Halteeinrichtung (102) mit einer Saugplatte (104), auf der der Filmabschnitt (200) platzierbar und an der ein Unterdruck zur Fixierung des Filmabschnitts anlegbar ist,
- eine Hubeinrichtung (106), die ausgebildet ist, die Halteeinrichtung (102) mit der Saugplatte (104) zwischen einer angehobenen Stellung und einer abgesenkten Stellung zu verstellen,
- eine Beleuchtungseinrichtung (114) zur Beleuchtung des Filmabschnitts (200) aus einer ersten Richtung unter einem ersten Winkel (202) bezüglich einer Normalen (204) des auf der Saugplatte (104) fixierten Filmabschnitts (200) derart, dass das holografische Merkmal rekonstruiert, und
- eine optische Erfassungseinrichtung (108) deren optische Achse (138) um einen vom ersten Winkel (202) abweichenden zweiten Winkel (206) bezüglich der Normalen (204) des auf der Saugplatte (104) fixierten Filmabschnitts (200) derart ausgerichtet ist, um das rekonstruierte holografische Merkmal optisch zu erfassen.

2. Vorrichtung (100) nach Anspruch 1, **dadurch gekennzeichnet, dass** eine Aufstreifeinrichtung (120) vorhanden ist, die ausgebildet ist, den Filmabschnitt (200) auf die Saugplatte (104) aufzustreifen.

3. Vorrichtung (100) nach Anspruch 2, **dadurch gekennzeichnet, dass** die Aufstreifeinrichtung (120) einen zwischen zwei Anschlägen (136) verschiebbaren Schlitten(124) umfasst, an welchem eine auf einer Achse drehbar gelagerte und mit dem Filmabschnitt (200) wechselwirkende Anpressrolle (122) gelagert ist.

4. Vorrichtung (100) nach einem der Ansprüche 1 bis 3, **dadurch gekennzeichnet, dass** die Beleuchtungseinrichtung (114) an einem Beleuchtungsarm (116) angeordnet ist, und dass der Beleuchtungsarm (116) eine Winkeleinstelleinrichtung (118) aufweist, die ausgebildet ist, die Beleuchtungseinrichtung (114) zur Einstellung des ersten Winkels (202) zu verschwenken und/oder in ihrer Lage festzulegen.

5. Vorrichtung (100) nach einem der Ansprüche 1 bis 4, **dadurch gekennzeichnet, dass** zur Rekonstruktion und optischen Erfassung mindestens eines weiteren holografischen Merkmals eine zweite Beleuchtungseinrichtung (126) zur Beleuchtung des Filmabschnitts (200) aus einer zweiten Richtung unter einem dritten Winkel (208) bezüglich der Normalen (204) des auf der Saugplatte (104) fixierten Filmabschnitts (200) vorhanden ist.

6. Vorrichtung (100) nach Anspruch 5, **dadurch gekennzeichnet, dass** die zweite Beleuchtungseinrichtung (126) an einem zweiten Beleuchtungsarm (128) angeordnet ist, und dass der zweite Beleuchtungsarm (128) eine Winkeleinstelleinrichtung (118) aufweist, die ausgebildet ist, die zweite Beleuchtungseinrichtung (126) zur Einstellung des dritten Winkels (208) zu verschwenken und/oder in ihrer Lage festzulegen.

7. Vorrichtung (100) nach einem der Ansprüche 5 oder 6, **dadurch gekennzeichnet,**
**dass** die Beleuchtungseinrichtung (114) und/oder die zweite Beleuchtungseinrichtung (126) ausgebildet ist, umgeschaltet zu werden zwischen einer ersten Leuchtkonfiguration, in welcher sie Licht einer ersten Wellenlänge oder eines ersten Wellenlängenspektrums emittiert, und einer zweiten Leuchtkonfiguration, in welcher sie Licht einer zweiter Wellenlänge oder eines zweiten Wellenlängenspektrums emittiert.

8. Vorrichtung (100) nach einem der Ansprüche 1 bis 7, **dadurch gekennzeichnet, dass** ein Druckmarkensensor vorhanden ist, der ausgebildet ist, den zu prüfenden Filmabschnitt (200), insbesondere während seines Transports auf oder über die Halteeinrichtung (102) zu detektieren.

9. Vorrichtung (100) nach einem der Ansprüche 1 bis 8, **dadurch gekennzeichnet, dass** die optische Erfassungseinrichtung (108) eine erste Kamera (110) zur Erfassung von reflektiertem Licht einer ersten Wellenlänge oder eines ersten Wellenlängenspektrums sowie eine zweite Kamera (112) zur Erfassung von reflektiertem Licht einer von der ersten Wellenlänge abweichenden zweiten Wellenlänge oder zur Erfassung eines vom ersten Wellenlängenspektrum abweichenden zweiten Wellenlängenspektrum umfasst.

10. Verfahren zur Erfassung eines holografischen Merkmals an einem Filmabschnitt (200) eines bahnförmigen Belichtungsfilms, in den das holografische Merkmal einbelichtet wurde, umfassend die Schritte:
- Transportieren des bahnförmigen Belichtungsfilms über eine Halteeinrichtung (102) mit einer Saugplatte (104), die sich in einer abgesenkten Stellung befindet,
- Erkennen des zu prüfenden Filmabschnitts (200) an oder bei der Halteeinrichtung (102),
- Fixieren des Filmabschnitts (200) an der Saugplatte (104) mittels eines Unterdrucks,
- Verstellen der Halteeinrichtung (102) mit der Saugplatte (104) aus der abgesenkten Stellung in eine angehobene Stellung mittels einer Hubeinrichtung (106),
- Beleuchten des Filmabschnitts (200) aus einer ersten Richtung unter einem ersten Winkel (202) bezüglich einer Normalen (204) des auf der Saugplatte (104) fixierten Filmabschnitts (200) mittels einer Beleuchtungseinrichtung (114) derart, dass das holografische Merkmal rekonstruiert, und
- optisches Erfassen des rekonstruierten holografischen Merkmals mittels einer optischen Erfassungseinrichtung (108), deren optische Achse (138) um einen vom ersten Winkel (202) abweichenden zweiten Winkel (206) bezüglich der Normalen (204) des auf der Saugplatte(104) fixierten Filmabschnitts (200) ausgerichtet ist.

11. Verfahren nach Anspruch 10, **dadurch gekennzeichnet, dass** nach dem Verstellen der Halteeinrichtung (102) in die angehobene Stellung der auf der Halteeinrichtung (102) positionierte Filmabschnitt (200) mittels einer Aufstreifeinrichtung (120) auf die Saugplatte (104) aufgestreift wird.

12. Verfahren nach Anspruch 11, **dadurch gekennzeichnet, dass** der auf der Halteeinrichtung(102) positionierte Filmabschnitt (200) mittels einer Anpressrolle (122) der Aufstreifeinrichtung (120) aufgestreift wird.

13. Verfahren nach Anspruch 11 oder 12, **dadurch gekennzeichnet, dass** der Filmabschnitt (200) aus einer zweiten Richtung unter einem dritten Winkel (208) bezüglich der Normalen (204) des auf der Saugplatte (104) fixierten Filmabschnitts (200) mittels einer zweiten Beleuchtungseinrichtung (126) derart beleuchtet wird, dass mindestens ein weiteres holografisches Merkmal rekonstruiert und optisch erfasst wird.

14. Verfahren nach einem der Ansprüche 10 bis 13, **dadurch gekennzeichnet, dass** der bahnförmige Belichtungsfilm filmaufwärts und/oder filmabwärts des Filmabschnitts (200) in seiner Lage zumindest teilweise fixiert wird, bevor die Halteeinrichtung (102) in die angehobene Stellung gebracht wird.

15. Verfahren nach einem der Ansprüche 10 bis 14, **dadurch gekennzeichnet, dass** die optische Erfassungseinrichtung (108) ein bei einer ersten Wellenlänge oder bei einem ersten Wellenlängenbereich rekonstruierendes erstes holografisches Merkmal erfasst, bevor die optische Erfassungseinrichtung (108) ein bei einer von der ersten Wellenlänge abweichenden zweiten Wellenlänge oder bei einem vom ersten Wellenlängenbereich abweichenden zweiten Wellenlängenbereich rekonstruierendes zweites holografisches Merkmal erfasst.

## Claims

1. An apparatus (100) for detecting a holographic feature on a film section (200) of a web-shaped exposure film, in which the holographic features has been imaged, comprising:
- a holding device (102) having a suction plate (104) on which the film section (200) can be placed and to which a negative pressure can be applied for fixing the film section can be applied,
- a lifting device (106), which is designed to move the holding device (102) with the suction plate (104) between a raised position and a lowered position,
- an illumination device (114) for illuminating the film section (200) from a first direction at a first angle (202) with respect to a normal (204) of the film section (200) fixed on the suction plate (104) such that the holographic feature is reconstructed, and
- an optical detection device (108) whose optical axis (138) is oriented at a second angle (206), different from the first angle (202), with respect to the normal (204) of the film section (200) fixed on the suction plate (104) so as to optically detect the reconstructed holographic feature.

2. The apparatus (100) according to claim 1, **characterized in that** a spreading device (120) is provided, which is designed to spread the film section (200) onto the suction plate (104)

3. The apparatus (100) according claim 2, **characterized in that** the spreading device (120) comprises a carriage (124) displaceable between two stops (136), on which a pressing roll (122) is rotatably mounted on an axis, interacting with the film section (200).

4. The apparatus (100) according to any one of claims 1 to 3, **characterized in that** the illumination device (114) is arranged on an illumination arm (116), and **in that** the illumination arm (116) has an angle adjustment device (118) which is designed to swivel the illumination device (114) for adjusting the first angle (202) and/or to fix it in its position.

5. The apparatus (100) according to any one of claims 1 to 4, **characterized in that**, for reconstruction and optical detection of at least one further holographic feature, a second illumination device (126) is provided for illuminating the film section (200) from a second direction at a third angle (208) with respect to the normal (204) of the film section (200) fixed on the suction plate (104).

6. The apparatus (100) of claim 5, **characterized in that** the second illumination device (126) is arranged on a second illumination arm (128), and **in that** the second illumination arm (128) comprises an angle adjustment device (118) configured to pivot and/or fix the second illumination device (126) in position for adjusting the third angle (208).

7. The apparatus (100) of any one of claims 5 or 6, **characterized in that** the illumination device (114) and/or the second illumination device (126) is adapted to be switched between a first illumination configuration, in which it emits light of a first wavelength or a first wavelength spectrum, and a second illumination configuration, in which it emits light of a second wavelength or a second wavelength spectrum.

8. The apparatus (100) according to any one of claims 1 to 7, **characterized, in that** a print mark sensor is present which is designed to detect the film section (200) to be inspected, in particular during its transport onto or over the holding device (102).

9. The apparatus (100) of any one of claims 1 to 8, **characterized in that** the optical detection device (108) comprises a first camera (110) for detecting reflected light of a first wavelength or wavelength spectrum and a second camera (112) for detecting reflected light of a second wavelength different from the first wavelength or a second wavelength spectrum different from the first wavelength spectrum.

10. The method for detecting a holographic feature on a film section (200) of a web-shaped exposure film, comprising the steps of:
- transporting the web-shaped exposure film over a holding device (102) having a suction plate (104) which is in a lowered position, and
- detecting the film section (200) to be inspected at or near the holding device (102) and,
- fixing the film section (200) to the suction plate (104) by means of a negative pressure,
- shifting the holding device (102) with the suction plate (104) from the lowered position to a raised position by means of a lifting device (106),
- illuminating the film section (200) form a first direction under an angle (202) with respect to a normal (204) of the film section (200) fixed on the suction plate (104) by means of an illumination device (114) in such a manner that the holographic feature is reconstructed, and
- optically detecting the reconstructed holographic feature by means of an optical detection device (108) whose optical axis (138) is oriented at a second angle (206) different from the first angle (202) with respect to the normal (204) of the film section (200) fixed on the suction plate (104).

11. The method according to claim 10, **characterized in that** the film section (200) positioned on the holding device (102) is slipped onto the suction plate (104) by means of a spreading device (120).

12. The method according to claim 11, **characterized in that** the film section (200) positioned on the holding device (102) is spread by means of a pressing roll (122) of the spreading device (120).

13. The method according to claim 11 or 12, **characterized in that** the film section (200) is illuminated form a second direction at a, third angle (208) with respect to the normal (204) of the film section (200) fixed on the suction plate (104) by means of a second illumination device (126) in such a way that at least one further holographic feature is reconstructed and optically detected.

14. The method according to any one of claims 10 to 13, **characterized in that** the web-shaped exposure film is at least partially fixed in position upstream and/or downstream of the film section (200) before the holding device (102) is brought into the raised position.

15. The method of any one of claims 10 to 14, **characterized in that** the optical detection device (108) detects a first holographic feature reconstructing at a first wavelength or at a first wavelength range before the optical detection device (108) detects a second holographic feature reconstructing at a second wavelength different from the first wavelength or at a second wavelength range different from the first wavelength range.

## Revendications

1. Dispositif (100) pour la détection d'une caractéristique holographique au niveau d'une section de film (200) d'un film d'exposition en forme de bande, dans lequel la caractéristique holographique a été exposée, comprenant :
- un appareil de retenue (102) avec une plaque d'aspiration (104), sur laquelle la section de film (200) peut être placée et au niveau de laquelle une dépression peut être appliquée pour la fixation de la section de film,
- un appareil de levage (106) qui est réalisé afin de régler l'appareil de retenue (102) avec la plaque d'aspiration (104) entre une position levée et une position abaissée,
- un appareil d'éclairage (114) pour l'éclairage de la section de film (200) à partir d'un premier sens selon un premier angle (202) par référence à une normale (204) de la section de film (200) fixée sur la plaque d'aspiration (104) de telle manière que la caractéristique holographique se reconstruise, et
- un appareil de détection (108) optique, dont l'axe optique (138) est orienté autour d'un deuxième angle (206) divergeant du premier angle (202) par référence à la normale (204) de la section de film (200) fixée sur la plaque d'aspiration (104) de manière à détecter optiquement la caractéristique holographique reconstruite.

2. Dispositif (100) selon la revendication 1, **caractérisé en ce qu'**un appareil de raclage (120) est présent, lequel est réalisé afin de racler la section de film (200) sur la plaque d'aspiration (104).

3. Dispositif (100) selon la revendication 2, **caractérisé en ce que** l'appareil de raclage (120) comporte un chariot (124) mobile entre deux butées (136), au niveau duquel un rouleau de pressage (122) logé de manière rotative sur un axe et coagissant avec la section de film (200) est logé.

4. Dispositif (100) selon l'une quelconque des revendications 1 à 3, **caractérisé en ce que** l'appareil d'éclairage (114) est agencé au niveau d'un bras d'éclairage (116), et que le bras d'éclairage (116) présente un appareil de réglage angulaire (118) qui est réalisé afin de pivoter le l'appareil d'éclairage (114) pour le réglage du premier angle (202) et/ou de le fixer dans sa position.

5. Dispositif (100) selon l'une quelconque des revendications 1 à 4, **caractérisé en ce que** pour la reconstruction et la détection optique au moins d'une autre caractéristique holographique, un second appareil d'éclairage (126) est présent pour l'éclairage de la section de film (200) à partir d'un second sens selon un troisième angle (208) par référence à la normale (204) de la section de film (200) fixée sur la plaque d'aspiration (104).

6. Dispositif (100) selon la revendication 5, **caractérisé en ce que** le second appareil d'éclairage (126) est agencé au niveau d'un second bras d'éclairage (128), et que le second bras d'éclairage (128) présente un appareil de réglage angulaire (118) qui est réalisé afin de pivoter le second appareil d'éclairage (126) pour le réglage du troisième angle (208) et/ou de le fixer dans sa position.

7. Dispositif (100) selon l'une quelconque des revendications 5 ou 6, **caractérisé en ce que**
l'appareil d'éclairage (114) et/ou le second appareil d'éclairage (126) est réalisé afin d'être commuté entre une première configuration d'éclairage, dans laquelle il émet de la lumière d'une première longueur d'onde ou d'un premier spectre de longueur d'onde, et une seconde configuration d'éclairage, dans laquelle il émet de la lumière d'une seconde longueur d'onde ou d'un second spectre de longueur d'onde.

8. Dispositif (100) selon l'une quelconque des revendications 1 à 7, **caractérisé en ce qu'**un capteur de marque d'impression est présent, lequel est réalisé afin de détecter la section de film (200) à vérifier, en particulier pendant son transport sur ou au-dessus de l'appareil de retenue (102).

9. Dispositif (100) selon l'une quelconque des revendications 1 à 8, **caractérisé en ce que** l'appareil de détection (108) optique comporte une première caméra (110) pour la détection de la lumière réfléchie d'une première longueur d'onde ou d'un premier spectre de longueur d'onde ainsi qu'une seconde caméra (112) pour la détection de la lumière réfléchie d'une seconde longueur d'onde divergeant de la première longueur d'onde ou pour la détection d'un second spectre de longueur d'onde divergeant du premier spectre de longueur d'onde.

10. Procédé de détection d'une caractéristique holographique au niveau d'une section de film (200) d'un film d'exposition en forme de bande, dans lequel la caractéristique holographique a été exposée, comprenant les étapes suivantes :
- le transport du film d'exposition en forme de bande par le biais d'un appareil de retenue (102) avec une plaque d'aspiration (104) qui se trouve dans une position abaissée,
- la détection de la section de film (200) à vérifier au niveau ou près de l'appareil de retenue (102),
- la fixation de la section de film (200) à la plaque d'aspiration (104) au moyen d'une dépression,
- le réglage de l'appareil de retenue (102) avec la plaque d'aspiration (104) de la position abaissée dans une position levée au moyen d'un appareil de levage (106),
- l'éclairage de la section de film (200) à partir d'un premier sens selon un premier angle (202) par référence à une normale (204) de la section de film (200) fixée sur la plaque d'aspiration (104) au moyen d'un appareil d'éclairage (114) de telle manière que la caractéristique holographique se reconstruise, et
- la détection optique de la caractéristique holographique reconstruite au moyen d'un appareil de détection (108) optique, dont l'axe optique (138) est orienté autour d'un deuxième angle (206) divergeant du premier angle (202) par référence à la normale (204) de la section de film (200) fixée sur la plaque d'aspiration (104).

11. Procédé selon la revendication 10, **caractérisé en ce qu'**après le réglage de l'appareil de retenue (102) dans la position levée, la section de film (200) positionnée sur l'appareil de retenue (102) est raclée au moyen d'un appareil de raclage (120) sur la plaque d'aspiration (104).

12. Procédé selon la revendication 11, **caractérisé en ce que** la section de film (200) positionnée sur l'appareil de retenue (102) est raclée au moyen d'un rouleau de pressage (122) de l'appareil de raclage (120).

13. Procédé selon la revendication 11 ou 12, **caractérisé en ce que** la section de film (200) est éclairée à partir d'un second sens selon un troisième angle (208) par référence à la normale (204) de la section de film (200) fixée sur la plaque d'aspiration (104) au moyen d'un second appareil d'éclairage (126) de telle manière qu'au moins une autre caractéristique holographique se reconstruise et soit détectée optiquement.

14. Procédé selon l'une quelconque des revendications 10 à 13, **caractérisé en ce que** le film d'exposition en forme de bande est fixé au moins partiellement en amont du film et/ou en aval du film de la section de film (200) dans sa position, avant que l'appareil de retenue (102) ne soit amené dans la position levée.

15. Procédé selon l'une quelconque des revendications 10 à 14, **caractérisé en ce que** l'appareil de détection (108) optique détecte une première caractéristique holographique se reconstruisant pour une première longueur d'onde ou pour une première plage de longueurs d'onde avant que l'appareil de détection (108) optique ne détecte une seconde caractéristique holographique se reconstruisant pour une seconde longueur d'onde divergeant de la première longueur d'onde ou pour une seconde plage de longueurs d'onde divergeant de la première plage de longueurs d'onde.
